(19) Europäisches Patentamt
European Patent Office
Office européen des brevets

(11) EP 4 317 212 A1

(12) # EUROPEAN PATENT APPLICATION
published in accordance with Art. 153(4) EPC

(43) Date of publication:
**07.02.2024 Bulletin 2024/06**

(21) Application number: **22779460.9**

(22) Date of filing: **26.01.2022**

(51) International Patent Classification (IPC):
***C08F 20/10*** *(2006.01)* ***C08F 2/44*** *(2006.01)*

(52) Cooperative Patent Classification (CPC):
**C08F 2/44; C08F 20/10**

(86) International application number:
**PCT/JP2022/002950**

(87) International publication number:
**WO 2022/209230 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061631**

(71) Applicant: **Cosmo Oil Lubricants Co., Ltd.
Tokyo 105-8331 (JP)**

(72) Inventors:
- **ITO, Genki
Satte-shi, Saitama 340-0193 (JP)**
- **TERAUCHI, Ryuji
Satte-shi, Saitama 340-0193 (JP)**
- **WATANABE, Satoshi
Satte-shi, Saitama 340-0193 (JP)**

(74) Representative: **Adamson Jones
Park View House
58 The Ropewalk
Nottingham NG1 5DW (GB)**

(54) **CURABLE COMPOSITION, AND CURED PRODUCT**

(57) Provided are: a curable composition, containing a heat-conductive filler (A), including at least one selected from the group consisting of a heat-conductive filler A having a volume average particle size of from 0.3 μm to less than 1 μm and a heat-conductive filler B having a volume average particle size of from 1 μm to less than 10 μm, and including a heat-conductive filler C having a volume average particle size of from 10 μm to 15 μm, a monomer (B) having a (meth)acryloyl group, a polymerization initiator (C), and a dispersant (D), wherein based on a total mass of the heat-conductive filler (A), a content X of the heat-conductive filler A is from 0 mass% to 40 mass%, a content Y of the heat-conductive filler B is from 0 mass% to 40 mass%, a content Z of the heat-conductive filler C is from 20 mass% to 60 mass%, wherein the content X and the content Y are not both 0 mass%); and a cured product thereof.



Processed by Luminess, 75001 PARIS (FR)

## Description

### Technical Field

The present disclosure relates to a curable composition and a cured product.

### Background Art

In recent years, performance of electronic devices such as personal computers, mobile phones, and personal digital assistants (PDAs), and lighting and display devices such as light emitting diodes (LEDs) and electronic luminescents (ELs) as improved remarkably. This is result of the remarkable performance improvement of arithmetic elements and light-emitting elements. The amount of the heat generated has increased significantly as the performance of arithmetic and light-emitting elements has improved in this way; therefore, how to dissipate heat in electronic, lighting, and display devices has become a critical issue. In order to transmit heat generated by the arithmetic element or the light emitting element to a heat-dissipating element without loss and dissipate the heat through the heat-dissipating element, a heat countermeasure is taken by providing a thermal interface material (TIM) between a heat-generator and a heat-dissipator. As materials generally used as TIMs, heat dissipation sheets, thermal conductive greases, gap fillers, and the like are known, and the gap fillers that are paste in an initial state and cured after application to become a solid has attracted attention.

As a gap filler excellent in flexibility, shape stability, and thermal conductivity, for example, WO 2020/149193 A discloses a curable composition containing a compound (A) having one (meth)acrylate group in one molecule, a compound (B) having two or more (meth)acrylate groups in one molecule, a polymerization initiator (C), a dispersant (D), and a heat-conductive filler (E) containing zinc oxide.

## SUMMARY OF INVENTION

### Technical Problem

A problem addressed by an embodiment of the disclosure is to provide a curable composition having excellent oil separation resistance.

Another problem addressed by an embodiment of the disclosure is to provide a cured product of the curable composition having excellent oil separation resistance.

In the disclosure, "oil separation resistance" means that separation between a heat-conductive filler and a liquid component contained in a curable composition is suppressed in a case in which the curable composition before curing according to the disclosure is aged over time.

### Solution to Problem

The disclosure includes the following embodiments.

<1> A curable composition, containing:

a heat-conductive filler (A) including at least one selected from the group consisting of a heat-conductive filler A having a volume average particle size of from 0.3 μm to less than 1 μm and a heat-conductive filler B having a volume average particle size of from 1 μm to less than 10 μm, and including a heat-conductive filler C having a volume average particle size of from 10 μm to 15 μm;
a monomer (B) having a (meth)acryloyl group;
a polymerization initiator (C); and
a dispersant (D),
wherein, based on a total mass of the heat-conductive filler (A), a content X of the heat-conductive filler A is from 0 mass% to 40 mass%, a content Y of the heat-conductive filler B is from 0 mass% to 40 mass%, a content Z of the heat-conductive filler C is from 20 mass% to 60 mass%, wherein the content X and the content Y are not both 0 mass%.

<2> The curable composition according to <1>, wherein the heat-conductive filler (A) includes at least one selected from zinc oxide, magnesium oxide, or aluminum oxide.
<3> The curable composition according to <2>, wherein the heat-conductive filler (A) includes zinc oxide.
<4> The curable composition according to any one of <1> to <3>, wherein the heat-conductive filler (A) is a surface-treated heat-conductive filler.

<5> The curable composition according to any one of <1> to <4>, wherein the monomer (B) includes a compound represented by the following Formula (1):

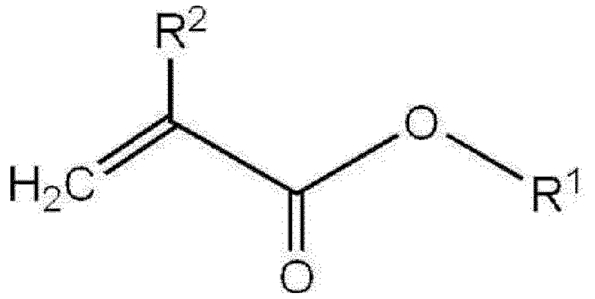

(1)

wherein $R^1$ represents an alkyl group having from 1 to 50 carbon atoms, and $R^2$ represents a hydrogen atom or a methyl group.

<6> The curable composition according to any one of <1> to <5>, wherein the monomer (B) includes a compound represented by the following Formula (2):

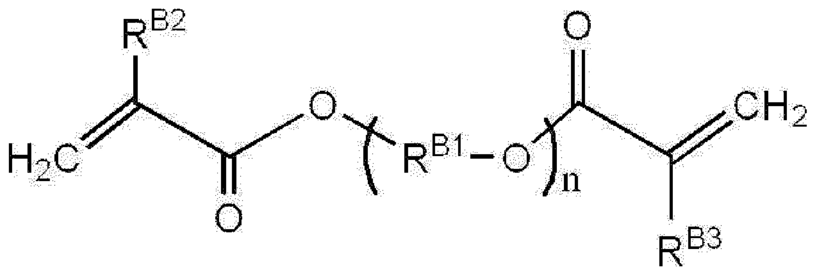

(2)

wherein $R^{B1}$ represents an alkylene group having from 1 to 5 carbon atoms, $R^{B2}$ and $R^{B3}$ each independently represent a hydrogen atom or a methyl group, and n represents an integer of 4 or higher.

<7> A cured product of the curable composition according to any one of <1> to <6>. Advantageous Effects of Invention

According to an embodiment of the disclosure, there is provided a curable composition having excellent oil separation resistance.

According to another embodiment of the disclosure, there is provided a cured product of the curable composition having excellent oil separation resistance.

## DESCRIPTION OF EMBODIMENTS

Hereinafter, a curable composition and a cured product thereof according to the disclosure will be described in detail.

In the disclosure, "to" representing a numerical range represents a range including numerical values described as an upper limit and a lower limit, respectively. In a case in which only the upper limit value is described as a unit in the numerical range represented by "to", this means that the lower limit value is also in the same unit.

In a case in which a plurality of substances corresponding to each component are present in a composition, the content ratio or content of each component in the composition in the disclosure means the total content ratio or total content of the plurality of substances present in the composition unless otherwise specified.

In a numerical range described in a stepwise manner in the disclosure, an upper limit value or a lower limit value described in a certain numerical range may be replaced with an upper limit value or a lower limit value described in another numerical range described in a stepwise manner.

In a numerical range described in the disclosure, an upper limit value or a lower limit value described in a certain numerical range may be replaced with a value shown in Examples.

In the disclosure, "(meth)acryl" is a term used as a concept including both acryl and methacryl, and "(meth)acryloyl" is a term used as a concept including both acryloyl and methacryloyl.

In the disclosure, "mass%" and "wt%" are synonymous, and "part(s) by mass" and "part(s) by weight" are synonymous.

In a case in which a plurality of substances corresponding to each component are present in a composition, the amount of each component in the composition in the disclosure means the total amount of the plurality of substances present in the composition unless otherwise specified.
In the disclosure, a combination of two or more preferred aspects is a more preferred aspect.
In the disclosure, "JIS" is used as an abbreviation for Japanese Industrial Standards.

(Curable Composition)

A curable composition according to the disclosure contains a heat-conductive filler (A), including at least one selected from the group consisting of a heat-conductive filler A having a volume average particle size of from 0.3 μm to less than 1 μm and a heat-conductive filler B having a volume average particle size of from 1 μm to less than 10 μm, and including a heat-conductive filler C having a volume average particle size of from 10 μm to 15 μm, a monomer (B) having a (meth)acryloyl group, a polymerization initiator (C), and a dispersant (D), wherein, based on a total mass of the heat-conductive filler (A), a content X of the heat-conductive filler A is from 0 mass% to 40 mass%, a content Y of the heat-conductive filler B is from 0 mass% to 40 mass%, a content Z of the heat-conductive filler C is from 20 mass% to 60 mass%. The content X and the content Y are not both 0 mass%.
The curable composition according to the disclosure has the above configuration, and thus oil separation resistance is excellent.
In the following description, the heat-conductive filler A having a volume average particle size of from 0.3 μm to less than 1 μm, the heat-conductive filler B having a volume average particle size of from 1 μm to less than 10 μm, and the heat-conductive filler C having a volume average particle size of from 10 μm to 15 μm are simply referred to as the heat-conductive filler A, the heat-conductive filler B, and the heat-conductive filler C, respectively.
A curable composition containing solid particles such as a heat-conductive filler is required to have oil separation resistance over time (for example, in a case in which the curable composition is stored) from after preparation until the curable composition is used. In a curable composition having poor oil separation resistance, a desired viscosity or thermal conductivity cannot be obtained owing to the fact that the heat-conductive filler settles and requires stirring when used, the fact that a concentration gradient of a heat-conductive filler manifests in a storage container (for example, a syringe), and the like, and uniformity of the application amount and quality stability may be impaired.
In heat-conductive fillers contained in a curable composition, in a case in which the content ratios of the heat-conductive fillers having a medium particle size and a large particle size (for example, the volume average particle size is 10 μm or more) are large, the thermal conductivity is increased, but the heat-conductive fillers easily settle, and the oil separation resistance tends to deteriorate. In a case in which the content ratios of the heat-conductive fillers having a medium particle diameter and a large particle diameter are reduced, the oil separation resistance is improved, but the thermal conductivity tends to decrease.
However, the curable composition according to the disclosure contains, as the heat-conductive filler (A), a heat-conductive filler C and at least one selected from the group consisting of a heat-conductive filler A and a heat-conductive filler B, and the content X of the heat-conductive filler A, the content Y of the heat-conductive filler B, and the content Z of the heat-conductive filler C are set in predetermined ranges, and it is presumed that the excellent oil separation resistance of the curable composition results from this configuration.
The curable composition according to the disclosure can also have excellent thermal conductivity (specifically, 3 W/m K or higher). This is presumed to be because the heat-conductive filler (A) is included in the above-described configuration; more specifically, because the heat-conductive filler C is contained in the proportion of the content Z.
The curable composition according to the disclosure can have a viscosity corresponding to a use application (for example, a gap filler application). This is presumed to be because the heat-conductive filler (A) is included in the above-described configuration; more specifically, because the heat-conductive fillers A and B are contained in the proportions of the content Y and the content Z, respectively.
Hereinafter, each configuration of the curable composition according to the disclosure will be described.

<Heat-Conductive Filler (A)>

The curable composition according to the disclosure contains a heat-conductive filler (A).
The heat-conductive filler (A) includes at least one selected from the group consisting of a heat-conductive filler A having a volume average particle size of from 0.3 μm to less than 1 μm and a heat-conductive filler B having a volume average particle size of from 1 μm to less than 10 μm, and includes a heat-conductive filler C having a volume average particle size of from 10 μm to 15 μm.
Each of the heat-conductive filler A, the heat-conductive filler B, and the heat-conductive filler C may be one kind of heat-conductive filler having a predetermined volume average particle size, or may be two or more kinds of heat-conductive fillers having a predetermined volume average particle size.

The volume average particle size of the heat-conductive filler A is from 0.3 μm to less than 1 μm and preferably from 0.4 μm to 0.8 μm from the viewpoint of oil separation resistance.

The volume average particle size of the heat-conductive filler B is from 1 μm to less than 10 μm and preferably from 3 μm to 6 μm from the viewpoint of oil separation resistance.

The volume average particle size of the heat-conductive filler C is from 10 μm to 15 μm and preferably from 11 μm to 13 μm from the viewpoint of oil separation resistance and thermal conductivity.

The volume average particle size of the heat-conductive filler is measured by a laser diffraction/scattering method in accordance with JIS Z 8825:2013 (corresponding international standard: ISO 13320).

Specifically, the volume distribution of the heat-conductive filler particles is measured for a sample including heat-conductive filler particles using a laser diffraction scattering type particle size analyzer. Based on the obtained measured value (volume distribution), the volume average particle size of the heat-conductive filler contained in the sample can be determined.

Examples of the laser diffraction scattering type particle size analyzer that can be used include a nanoparticle size distribution measuring apparatus SALD-7500nano (product name) manufactured by SHIMADZU CORPORATION.

Whether the curable composition contains the heat-conductive filler belonging to one of the heat-conductive filler A, the heat-conductive filler B, or the heat-conductive filler C can be confirmed by a laser diffraction scattering type particle size analyzer.

Specifically, the above matter can be confirmed by the following method.

Components other than the heat-conductive filler are removed from the curable composition to isolate the heat-conductive filler. The volume distribution of a measurement sample prepared from the isolated heat-conductive filler is measured using a laser diffraction scattering type particle size analyzer. Based on the measurement results, the presence or absence of filler particles existing in the heat-conductive filler A, the heat-conductive filler B, or the heat-conductive filler C is confirmed. The components other than the heat-conductive filler are removed by the following method.

-Removal of Components Other Than Heat-Conductive Filler-

The curable composition is dissolved in a solvent, which does not dissolve a heat-conductive filler, such as hexane, and then centrifuged. By repeating the above steps three or more times, the heat-conductive filler and the components other than the heat-conductive filler are separated.

The obtained heat-conductive filler is dried in a thermostatic bath at 150°C for 90 minutes to remove a residual solvent.

In a case in which the catalog value can be confirmed for the volume average particle size of the heat-conductive filler, the catalog value is adopted.

The heat-conductive filler A and the heat-conductive filler B included in the heat-conductive filler (A) may be either one or both. From the viewpoint of oil separation resistance, the heat-conductive filler (A) preferably includes both the heat-conductive filler A and the heat-conductive filler B.

The content X of the heat-conductive filler A, the content Y of the heat-conductive filler B, and the content Z of the heat-conductive filler C can be confirmed by calculating the content ratios of the heat-conductive filler A, the heat-conductive filler B, and the heat-conductive filler C based on the measurement result of the particle size distribution of the heat-conductive filler (A) obtained by the laser diffraction scattering type particle size analyzer.

The content X of the heat-conductive filler A is from 0 mass% to 40 mass%, preferably from 20 mass% to 35 mass%, and more preferably from 25 mass% to 30 mass%, based on the total mass of the heat-conductive filler (A).

The content Y of the heat-conductive filler B is from 0 mass% to 40 mass%, preferably from 10 mass% to 30 mass%, and more preferably from 15 mass% to 25 mass%, based on the total mass of the heat-conductive filler (A).

The content Z of the heat-conductive filler C is from 20 mass% to 60 mass% based on the total mass of the heat-conductive filler (A). The content Z can be, for example, from 40 mass% to 60 mass%.

In a case in which the heat-conductive filler (A) includes both the heat-conductive filler A and the heat-conductive filler B, from the viewpoint of oil separation resistance, a content ratio [A: B] of the heat-conductive filler A to the heat-conductive filler B is preferably from 30 : 70 to 80 : 20, more preferably from 50 : 50 to 70 : 30, and still more preferably from 55 : 45 to 65 : 35 on a mass basis.

A content ratio [(A + B) : C] of the heat-conductive filler A and the heat-conductive filler B to the heat-conductive filler C is preferably from 40 : 60 to 60 : 40 and more preferably from 45 : 55 to 55 : 45 on a mass basis from the viewpoint of oil separation resistance and thermal conductivity.

The material of the heat-conductive filler (A) is not particularly limited, and examples thereof include zinc oxide, magnesium oxide, aluminum oxide, boron nitride, aluminum nitride, and carbon. From the viewpoint of oil separation resistance, insulation properties, high thermal conductivity, and use results as a heat-conductive filler, at least one selected from zinc oxide, magnesium oxide, or aluminum oxide is preferable, and zinc oxide is more preferable.

In an embodiment, the heat-conductive filler (A) preferably includes only the heat-conductive fillers A, B, and

C from the viewpoint of oil separation resistance, and it is more preferable that all of the heat-conductive fillers A, B, and C are zinc oxide from the viewpoint of oil separation resistance, viscosity, and high thermal conductivity.

The heat-conductive filler (A) may be a surface-treated heat-conductive filler. The surface-treated heat-conductive filler can improve affinity with components that can be contained other than the heat-conductive fillers, and can contribute to oil separation resistance, reduction in viscosity, and improvement of thermal conductivity.

The surface treatment for the heat-conductive filler is not particularly limited, and may be a physical treatment or a chemical treatment, and a known treatment capable of treating the surfaces of particles constituting the heat-conductive filler can be applied.

The surface treatment is preferably a treatment using a surface treatment agent.

Examples of the surface treatment agent include a silane-based coupling agent, a titanium-based coupling agent, a carboxylic acid-based coupling agent, a phosphoric acid-based coupling agent, a fatty acid, a polymer compound, a surfactant, and a fat and oil.

From the viewpoint of dispersibility, the heat-conductive filler (A) is preferably surface-treated using a silane-based coupling agent as a surface treatment agent.

Each of the heat-conductive fillers A, B, and C may be a surface-treated heat-conductive filler, or any one of the heat-conductive fillers may be a surface-treated heat-conductive filler. From the viewpoint of oil separation resistance and thermal conductivity, it is preferable to contain at least a surface-treated heat-conductive filler as the heat-conductive filler C.

-Content-

The content of the heat-conductive filler (A) is preferably 80 mass% or more, more preferably from 85 mass% to 98 mass%, and still more preferably from 90 mass% to 96 mass% with respect to the total mass of the composition.

The content of the heat-conductive filler (A) is preferably 40 vol% or more, more preferably from 47 vol% to 80 vol%, and still more preferably from 60 vol% to 80 vol% with respect to the total volume of the composition.

In a case in which the content of the heat-conductive filler (A) is in the above range, oil separation resistance can be further improved.

<Monomer (B) Having (Meth)acryloyl Group>

The curable composition according to the disclosure contains a monomer (B) having a (meth)acryloyl group. The monomer (B) having a (meth)acryloyl group may be a monomer having one (meth)acrylate group in one molecule or a monomer having two or more (meth)acrylate groups in one molecule.

The monomer having one (meth)acrylate group in one molecule is not particularly limited, and examples thereof include a linear, branched, or cyclic alkyl (meth)acrylate and acrylic acid.

From the viewpoint of achieving both heat resistance and flexibility, the monomer having one (meth)acrylate group in one molecule is preferably a linear or branched alkyl (meth)acrylate, and still more preferably a compound represented by the following Formula (1).

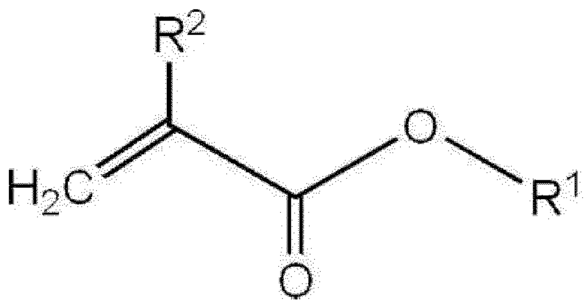

(1)

In Formula (1), $R^1$ represents an alkyl group having from 1 to 50 carbon atoms, and $R^2$ represents a hydrogen atom or a methyl group.

In Formula (1), the alkyl group in $R^1$ may be linear or branched. The alkyl group may have a substituent.

Examples of the substituent include a carboxy group, a hydroxy group, an amino group, an aryl group, and a heterocyclic group, a carboxy group or a hydroxy group is preferable, and a hydroxy group is more preferable.

From the viewpoint of achieving both heat resistance and flexibility, the total number of carbon atoms of the alkyl group in $R^1$ is from 2 to 30, more preferably from 5 to 25, still more preferably from 10 to 25, and particularly preferably from 12 to 24.

In a case in which the alkyl group has a substituent containing a carbon atom, the total number of carbon atoms means the total number of carbon atoms including the number of carbon atoms of the substituent.

From the viewpoint of achieving both heat resistance and flexibility, in Formula (1), $R^1$ is preferably a linear or branched alkyl group having a substituent and having from 2 to 30 carbon atoms in total, more preferably a linear or branched alkyl group having a hydroxy group and having from 2 to 25 carbon atoms in total, and preferably a linear or branched unsubstituted alkyl group having from 12 to 24 carbon atoms.

Examples of the monomer having one (meth)acrylate group in one molecule include lauryl (meth)acrylate, isostearyl (meth)acrylate, tetradecyl (meth)acrylate, hexadecyl (meth)acrylate, octadecyl (meth)acrylate, 2-hydroxyethyl (meth)acrylate, 4-hydroxybutyl (meth)acrylate, 2-hydroxybutyl (meth)acrylate, and 2-decyltetradecyl (meth)acrylate.

$R^2$ is a hydrogen atom or a methyl group, and is preferably a methyl group.

Examples of the monomer having two or more (meth)acrylate groups in one molecule include hexanediol di(meth)acrylate, butanediol di(meth)acrylate (1,3-butanediol di(meth)acrylate or 1,4-butanediol di(meth)acrylate), ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, and trimethylolpropane tri(meth)acrylate.

The monomer having two or more (meth)acrylate groups in one molecule is preferably a compound having two and/or three (meth)acrylate groups in one molecule, more preferably a compound having two (meth)acrylate groups in one molecule, and still more preferably a compound represented by the following Formula (2) from the viewpoint of achieving both heat resistance and flexibility.

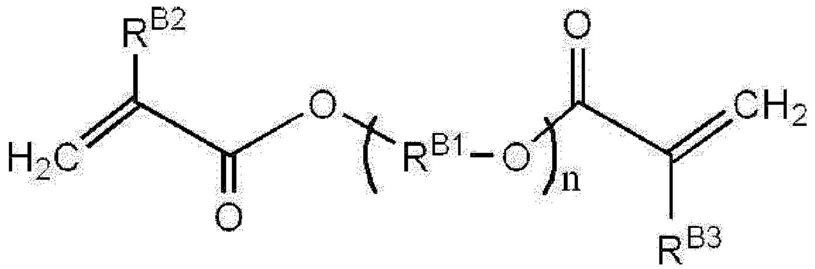

(2)

In Formula (2), $R^{B1}$ represents an alkylene group having from 1 to 5 carbon atoms, each of $R^{B2}$ and $R^{B3}$ represents a hydrogen atom or a methyl group, and n represents an integer of 4 or higher.

The alkylene group having from 1 to 5 carbon atoms represented by $R^{B1}$ may be linear or branched.

From the viewpoint of flexibility, the alkylene group represented by $R^{B1}$ is preferably a linear or branched alkylene group having from 2 to 5 carbon atoms, more preferably a linear or branched alkylene group having from 2 to 4 carbon atoms, and still more preferably a branched alkylene group having 3 or 4 carbon atoms.

It is preferable that $R^{B2}$ and $R^{B3}$ are each independently a methyl group.

n is preferably from 4 to 25, more preferably from 4 to 10, and still more preferably from 4 to 8.

From the viewpoint of flexibility and shape stability, in Formula (2), it is preferable that $R^{B1}$ is a linear or branched alkylene group having from 2 to 5 carbon atoms (more preferably a linear or branched alkylene group having from 2 to 4 carbon atoms, still more preferably a branched alkylene group having 3 or 4 carbon atoms), $R^{B2}$ and $R^{B3}$ are a methyl group, and n is from 4 to 25 (more preferably from 4 to 10, still more preferably from 4 to 8).

The content of the monomer (B) having a (meth)acryloyl group is preferably from 1 mass% to 10 mass% and more preferably from 2 mass% to 8 mass% with respect to the total mass of the composition.

The monomer (B) having a (meth)acryloyl group may be contained singly in the composition or two or more kinds thereof may be contained in the composition.

In an embodiment, the monomer (B) having a (meth)acryloyl group preferably includes at least one selected from monomers having one (meth)acrylate group in one molecule and at least one selected from monomers having two or more (meth)acrylate groups in one molecule.

A content ratio (A : B) of a content A of the monomer having one (meth)acrylate group in one molecule to a content B of the monomer having two or more (meth)acrylate groups in one molecule is preferably from 99.5 : 0.5 to 95 : 5 and more preferably from 99 : 1 to 97 : 3 on a mass basis from the viewpoint of hardness and curing rate of a cured product.

The monomer (B) having a (meth)acryloyl group is preferably a monomer having a molecular weight of less than 1,000.

The monomer in the disclosure means a polymerizable compound having a molecular weight of less than 1,000, and the polymerizable polymer means a polymerizable compound having a weight average molecular weight (Mw) of 1,000 or higher.

The concept of the "polymerizable polymer" in the disclosure also includes a so-called oligomer.

<Polymerization Initiator (C)>

The curable composition according to the disclosure contains a polymerization initiator (C).
As the polymerization initiator (C), compounds that generate polymerization initiating species such as radicals and cations by energy of light, heat, or both of light and heat, such as known thermal polymerization initiators and known photopolymerization initiators, can be appropriately selected and used.
The polymerization initiator (C) is preferably a radical polymerization initiator, more preferably a peroxide that generates free radicals by heat, and still more preferably an organic peroxide that generates free radicals by heat, from the viewpoint of the reactivity of the monomer (B) having a (meth)acryloyl group.
Examples of the organic peroxide include isobutyl peroxide, $\alpha,\alpha'$-bis(neodecanoylperoxy)diisopropylbenzene, cumylperoxy neodecanoate, di-n-propylperoxy dicarbonate, di-s-butylperoxy dicarbonate, 1,1,3,3-tetramethylbutylperoxy neodecanoate, bis(4-t-butylcyclohexyl)peroxy dicarbonate, 1-cyclohexyl-1-methylethyl peroxy neodecanoate, di-2-ethoxyethyl peroxy dicarbonate, di(ethylhexyl)peroxy dicarbonate, t-hexylperoxy neodecanoate, dimethoxybutyl peroxy dicarbonate, di(3-methyl-3-methoxybutyl)peroxy dicarbonate, t-butylperoxy neodecanoate, t-hexylperoxy pyvalate, 3,5,5-trimethylhexanoyl peroxide, octanoyl peroxide, lauroyl peroxide, stearoyl peroxide, 1,1,3,3-tetramethylbutylperoxy-2-ethylhexanoate, succinic peroxide, 2,5-dimethyl-2,5-di(2-ethylhexanoyl)hexane, 1-cyclohexyl-1-methylethylperoxy-2-ethylhexanoate, t-hexylperoxy-2-ethylhexanoate, 4-methylbenzoyl peroxide, t-butylperoxy-2-ethylhexanoate, m-toluyl benzoyl peroxide, benzoyl peroxide, t-butylperoxy isobutyrate, 1,1-bis(t-butylperoxy)2-methylcyclohexane, 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexanone, 2,2-bis(4,4-dibutylperoxycyclohexyl)propane, 1,1-bis(t-butylperoxy)cyclododecane, t-hexylperoxyisopropyl monocarbonate, t-butylperoxymaleic acid, t-butylperoxy-3,5,5-trimethylhexanoate, t-butylperoxylaurate, 2,5-dimethyl-2,5-di(m-toluoylperoxy)hexane, t-butylperoxyisopropyl monocarbonate, t-butylperoxy-2-ethylhexyl carbonate, t-hexylperoxybenzoate, 2,5-dimethyl-2,5-di(benzoylperoxy)hexane, t-butylperoxyacetate, 2,2-bis(t-butylperoxy)butane, t-butylperoxybenzoate, n-butyl-4,4-bis(t-butylperoxy)valerate, di-t-butylperoxyisophthalate, $\alpha,\alpha'$-bis(t-butylperoxy)diisopropylbenzene, dicumyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne, diisopropylbenzene hydroperoxide, t-butyltrimethylsilyl peroxide, 1,1,3,3-tetramethylbutyl hydroperoxide, cumene hydroperoxide, t-hexyl hydroperoxide, t-butyl hydroperoxide, benzoyl peroxide, and lauroyl peroxide.
Among them, from the viewpoint of reactivity, the organic peroxide is preferably at least one compound selected from the group consisting of benzoyl peroxide, t-butylperoxy-2-ethylhexyl carbonate, 1,1,3,3-tetramethylbutylperoxy-2-ethylhexanoate, and cumene hydroperoxide.

-Content-

The content of the polymerization initiator (C) is preferably from 0.5 parts by mass to 10 parts by mass and more preferably from 0.5 parts by mass to 4 parts by mass with respect to 100 parts by mass of the monomer (B) having a (meth)acryloyl group.

<Dispersant (D)>

The curable composition according to the disclosure contains a dispersant (D).
The dispersant is not particularly limited, and examples thereof include an anionic surfactant, a cationic surfactant, a non-ionic surfactant, an amphoteric surfactant, a polymeric surfactant, alcohols, a compound having a carboxy group such as fatty acid, a metal soap, a fatty acid oligomer compound, a fluorine-based surfactant, and a boron-based surfactant.
The dispersant (D) is preferably at least one compound selected from the group consisting of a non-ionic surfactant, a compound having a carboxy group, and metal soap.
Examples of the non-ionic surfactant include polyoxyethylene alkyl ether, polyoxyethylene alkylphenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, polyglycerin fatty acid ether, polyglycerin monoalkyl ether, sucrose fatty acid ester, polyoxyethylene alkylamine, a polyethylene glycol polypropylene glycol block copolymer, acetylene glycol, and a polyoxyethylene adduct of acetylene glycol.
The compound having a carboxy group is not particularly limited, and may be a fatty acid having one carboxy group and a hydrocarbon group in one molecule, or may be a compound having two or more carboxy groups in one molecule. In an embodiment, the dispersant (D) is more preferably a compound having a carboxy group and still more

preferably a fatty acid.

Examples of the compound having a carboxy group include an aromatic carboxylic acid and a fatty acid having an aliphatic hydrocarbon group having from 12 to 22 carbon atoms.

Examples of the fatty acid having an aliphatic hydrocarbon group having from 12 to 22 carbon atoms include stearic acid, oleic acid, palmitic acid, myristic acid, and lauric acid.

Examples of the compound having a carboxy group include polyvalent carboxylic acids (that is, polycarboxylic acids) having two or more carboxy groups in one molecule, such as oxalic acid, malonic acid, succinic acid, fumaric acid, maleic acid, and adipic acid, polycarboxylic acid salts such as alkylamine salts of polycarboxylic acids, alkylammonium salts, polycarboxylic acid polyaminoamide, polycarboxylic acid sodium salts, polycarboxylic acid ammonium salts, and polycarboxylic acid amino alcohol salts, and polycarboxylic acid-based copolymers.

Examples of the polycarboxylic acid-based compound include alkylamine salts of polycarboxylic acids, alkylammonium salts, polycarboxylic acid polyaminoamide, polycarboxylic acid sodium salts, polycarboxylic acid ammonium salts, and polycarboxylic acid amino alcohol salts.

Examples of the metal soap include metal salts of higher fatty acids such as calcium stearate, potassium oleate, and calcium oleate.

From the viewpoint of flexibility, the dispersant (D) preferably includes at least one compound selected from the group consisting of a polyglycerin monoalkyl ether compound, a compound having a carboxy group, and a metal soap, more preferably includes at least one compound selected from the group consisting of a polyglycerin monoalkyl ether compound and a fatty acid having an aliphatic hydrocarbon group having from 12 to 22 carbon atoms, and still more preferably includes at least one compound selected from the group consisting of a polyglycerin monoalkyl ether compound and a fatty acid having an unsaturated hydrocarbon group having from 18 to 22 carbon atoms.

-Content-

The content of the dispersant (D) is preferably from 0.1 parts by mass to 3 parts by mass, more preferably from 0.1 parts by mass to 1 part by mass, and particularly preferably from 0.2 parts by mass to 0.8 parts by mass with respect to 100 parts by mass of the heat-conductive filler (A).

<Plasticizer (E)>

The curable composition according to the disclosure preferably contains a plasticizer (E).

The plasticizer (E) is not particularly limited, and examples thereof include a polymer used as a plasticizer, a fatty acid ester compound having an unsaturated hydrocarbon group, an aromatic carboxylic acid ester compound, and an oil containing an aromatic carboxylic acid and a fatty acid having an unsaturated hydrocarbon group.

In the disclosure, the "polymer" means a compound having a weight average molecular weight (Mw) of 1,000 or higher.

The concept of the "polymer" in the disclosure also includes a so-called oligomer.

Examples of the polymer include an acrylic polymer, a polyester-based polymer, a polyurethane-based polymer, and a silicone polymer, and from the viewpoint of heat resistance and flexibility, an acrylic polymer is preferable.

Examples of the polymer used as a plasticizer include an acrylic polymer, a polyester-based polymer, a polyurethane-based polymer, and a silicone polymer, and from the viewpoint of heat resistance and flexibility, an acrylic polymer is preferable.

The acrylic polymer preferably includes a constituent unit formed of an acrylic acid ester from the viewpoint of heat resistance.

The (meth)acrylic ester is preferably an alkyl (meth)acrylate. Examples of the meth)acrylic ester include methyl (meth)acrylate, ethyl (meth)acrylate, butyl (meth)acrylate, and isobutyl (meth)acrylate.

The alkyl acrylate may be a nonfunctional alkyl acrylate, or may have a functional group such as a carboxy group or a hydroxy group (hydroxyl group).

The functional group of the alkyl acrylate is preferably a hydroxy group.

The acrylic polymer may be a polymer having a structure represented by the following Formula ($P^{AC}$).

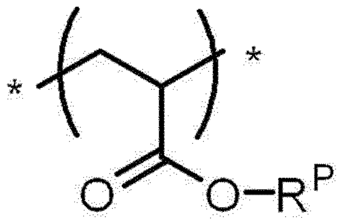

$(P^{AC})$

In Formula ($P^{AC}$), $R^P$ represents a hydrogen atom or an alkyl group.

In Formula ($P^{AC}$), the alkyl group may have a substituent. Examples of the substituent include a carboxy group, a hydroxyl group, and an amino group. The substituent is preferably a carboxy group or a hydroxy group, and more preferably a hydroxy group.

The alkyl group is preferably a saturated alkyl group and more preferably an alkyl group having from 1 to 4 carbon atoms.

In a case in which the curable composition according to the disclosure contains the plasticizer (E) and the plasticizer (E) is a polymer, from the viewpoint of heat resistance and flexibility, the polymer is preferably a polymer having a glass transition temperature of -20°C or lower, and more preferably an acrylic polymer having a glass transition temperature of - 20°C or lower.

In a case in which the curable composition according to the disclosure contains the plasticizer (E) and the plasticizer (E) is a polymer, from the viewpoint of heat resistance and flexibility, the polymer is preferably a polymer having a glass transition temperature of from - 90°C to -20°C, and more preferably an acrylic polymer having a glass transition temperature of from -90°C to -20°C.

The glass transition temperature (Tg) of the polymer is determined by examining an inflection point of a DSC curve measured using a differential thermal analyzer (DSC).

Examples of the fatty acid ester compound having an unsaturated hydrocarbon group include ester compounds such as palmitoleic acid, oleic acid, linoleic acid, and linolenic acid.

Examples of the aromatic carboxylic acid ester compound include ester compounds such as phthalic acid, terephthalic acid, benzoic acid, and trimellitic acid.

In a case in which the curable composition according to the disclosure contains the plasticizer (E), from the viewpoint of high-temperature stability, the plasticizer (E) preferably includes an aromatic carboxylic acid ester compound, and preferably includes a trimellitic acid ester.

-Content-

In a case in which the curable composition according to the disclosure contains the plasticizer (E), from the viewpoint of achieving both heat resistance and flexibility, the content of the plasticizer (E) (the total amount in a case in which the curable composition according to the disclosure contains two or more kinds of plasticizers (E)) is preferably from 10 parts by mass to 60 parts by mass, more preferably from 20 parts by mass to 50 parts by mass, and still more preferably from 30 parts by mass to 45 parts by mass with respect to 100 parts by mass of the monomer (B) having a (meth)acryloyl group.

The plasticizer (E) may be contained singly or two or more kinds thereof may be contained.

<Other Additives>

The curable composition according to the disclosure can contain components (hereinafter, also referred to as "other additives") other than the heat-conductive filler (A), the monomer (B) having a (meth)acryloyl group, the polymerization initiator (C), the dispersant (D), and the plasticizer (E), if necessary.

As the other additives, additives such as a reducing agent (F), an antioxidant, a corrosion inhibitor, a rust inhibitor, and a rheology control agent (viscosity modifier) can be appropriately blended.

The additives may be used singly, or in combination of two or more kinds thereof.

<<Reducing Agent (F)>>

The curable composition according to the disclosure may contain a reducing agent (F) if necessary.

In a case in which the curable composition according to the disclosure is applied to a two-pack type curable composition described below, it is preferable that one composition contains the reducing agent (F). By adding the reducing agent (F), the decomposition of the polymerization initiator (C) (for example, peroxide) is easily promoted, and the

polymerization reaction easily proceeds even under low temperature conditions.

The reducing agent (F) is not particularly limited as long as it can promote the decomposition of the polymerization initiator (C), and examples thereof include a known reducing agent used in combination with the polymerization initiator, but from the viewpoint of promoting the decomposition of the polymerization initiator (C), a metal compound-based reducing agent is preferable.

Examples of the metal compound-based reducing agent include stannous oxide, dioctyltin dilaurate, dibutyltin dilaurate, dibutyltin diacetate, zinc naphthenate, antimony trichloride, potassium olate, sodium O-phenylphenate, bismuth nitrate, ferric chloride, tetra-n-butyltin, tetra(2-ethylhexyl)titanate, cobalt 2-ethylhexoate, and ferric 2-ethylhexoate.

-Content-

In a case in which the curable composition according to the disclosure contains the reducing agent (F), from the viewpoint of a curing rate, the content of the reducing agent (F) is preferably from 0.5 parts by mass to 10 parts by mass and more preferably from 2 parts by mass to 9 parts by mass with respect to 100 parts by mass of the monomer (B) having a (meth)acryloyl group.

The reducing agent (F) may be used singly, or in combination of two or more kinds thereof.

<<Antioxidant>>

Examples of the antioxidant include a phenol-based antioxidant, an amine-based antioxidant, and a phosphite-based antioxidant.

<<Corrosion Inhibitor>>

Examples of the corrosion Inhibitor include benzotriazole, tolyltriazole, thiadiazole, and benzimidazole.

<<Rust Inhibitor>

Examples of the rust inhibitor include a sulfonic acid metal salt-based compound and a sorbitan compound.

<<Rheology Control Agent>>

In the disclosure, the rheology control agent refers to an additive that imparts non-Newtonian properties to shear rate changes. Specifically, the rheology control agent is an additive that imparts flow characteristics such that the shear viscosity decreases in a high shear rate range while increasing the shear viscosity in a low shear rate range.

The rheology control agent may be an inorganic compound-based rheology control agent or an organic compound-based rheology control agent. Examples of the inorganic compound-based rheology control agent include fumed silica, bentonite, mica, and kaolin.

Examples of the organic compound-based rheology control agent include a urea-modified polymer, a urethane-modified polymer, castor oil wax, polyethylene wax, polyamide wax, and fatty acid amide wax.

Among them, the rheology control agent is preferably an inorganic compound-based rheology control agent, more preferably fumed silica or bentonite, and still more preferably bentonite. In the case of using fumed silica, the surface thereof is preferably made hydrophobic by a silane coupling agent or another surface modifier. In the case of using bentonite, organic bentonite modified with a quaternary ammonium salt or another organic modifier is preferably used.

The content of the rheology control agent is not particularly limited, and can be appropriately set.

[Physical Property of Curable Composition]

A spreading consistency of the curable composition according to the disclosure is preferably from 100 to 500, more preferably from 260 to 340, and still more preferably from 280 to 310, from the viewpoint of viscoelasticity, handleability, and defoaming property.

The spreading consistency is determined by inserting 0.05 mL of a sample (curable composition before curing) between two acrylic plates under an environment of 25°C, applying a load of 100 g to the plates for 5 seconds to compress the sample, measuring the spreading diameter millimeter of the sample, and multiplying a value obtained by subtracting 1 from the measured value by 20.

$$\text{Spreading consistency} = (\text{Measured value} - 1) \times 20$$

[Form of Curable Composition]

The curable composition according to the disclosure is a preferably a one-pack type curable composition using one kind of curable composition in the case of applying the curable composition to a substrate, a heat-generating element, or the like. The curable composition according to the disclosure may be a two-pack type curable composition in which two kinds of curable compositions are mixed and used.

[Method of Producing Curable Composition]

A method of producing a curable composition according to the disclosure is not particularly limited. The curable composition according to the disclosure can be produced, for example, by the following method.
In an embodiment, the curable composition according to the disclosure is obtained by charging a heat-conductive filler (A), a polymerization initiator (C), a dispersant (D), and if necessary, a plasticizer (F) and other additives into a stirring container, and stirring and mixing these components.
A known stirrer or the like can be used for stirring and mixing.
In the method of producing a curable composition, in the case of adding other additives, stirring may be performed only for a time during which the additives can be dissolved or dispersed. The other additives may be added to the stirring container together with components other than the other additives, or may be added to the stirring container after mixing the components other than the other additives.

(Cured Product)

A cured product according to the disclosure is a cured product of the curable composition according to the disclosure. A method of curing the curable composition is not limited, and can be appropriately selected from commonly used methods. Examples of the curing method include irradiation with an active energy ray and heating, and a curing method by heating is preferable.
In the case of curing the curable composition by heating, the heating temperature is preferably 60°C or higher and more preferably 70°C or higher. The heating time is preferably from 1 minute to 120 minutes.
The curable composition may be cured by reacting with moisture in the air, or may be cured at room temperature.
The thermal conductivity of the cured product according to the disclosure is preferably from 0.5 [W/m·K] to 50 [W/m K], more preferably from 1 [W/m K] to 20 [W/m·K], and still more preferably from 3 [W/m·K] to 20 [W/m·K] from the viewpoint of flexibility, shape stability, and the property of suppressing a change in thermal conductivity.
As the softness of the cured product according to the disclosure, from the viewpoint of stress relaxation of the cured product to peripheral components, the Shore OO hardness is preferably 100 or less and more preferably 85 or less.
Similarly, the Asker C hardness is preferably 100 or less, more preferably 85 or less, and still more preferably 75 or less.
As the softness of the cured product according to the disclosure, the Shore OO hardness is determined in accordance with ASTM D2240, and the Asker C hardness is determined in accordance with JIS K 7312:1996.

<Use Application>

The curable composition according to the disclosure can be suitably used, for example, as TIM to be filled into a recess (that is, a gap between a heat-generating element and a heat-dissipating element) formed on a substrate.
Since the curable composition according to the disclosure is excellent in oil separation resistance, an intended quality can be maintained over a long period of time. Since the curable composition according to the disclosure is also excellent in viscosity and thermal conductivity, the obtained cured product is also excellent in manufacturability and thermal conductivity.
A cured product obtained from the curable composition according to the disclosure is excellent in flexibility, shape stability, and thermal conductivity, and thus is excellent in followability to an application surface such as a recess formed on a substrate, so that heat can be efficiently released even in a case in which there are parts with different heights on the substrate. Since the curable composition according to the disclosure can also follow irregularities of a microscopic material on a substrate, heat can be efficiently released, and the curable composition can be suitably applied as a gap filler from the viewpoint of excellent followability to an application surface associated with temperature fluctuation.

Examples

Hereinafter, the curable composition and the cured product according to the disclosure will be more specifically described with reference to Examples. The curable composition and the cured product according to the disclosure are not limited at all by these Examples.

(Examples 1 to 10 and Comparative Examples 1 to 6)

Each raw material was blended in the amount described in Table 1 or 2, and mixed at 2,000 rpm (revolutions per minute) for 2 minutes under atmospheric pressure using a planetary centrifugal mixer (manufactured by THINKY CORPORATION, product name; Awatori Rentaro ARV-310) to prepare a curable composition.
The contents (mass%) of the heat-conductive fillers A, B, and C in the total amount (100 mass%) of the heat-conductive filler (A) are shown in Table 3.
The following evaluations were performed using the curable compositions prepared in Examples 1 to 10 and Comparative Examples 1 to 6. The results are shown in Tables 1 and 2.

-Evaluation-

<Oil Separation Resistance>

In a storage container (high resist container, product name: BHR-150, manufactured by Kinki Yoki Co., Ltd.), 200 g of the curable composition prepared above was sealed, and left to stand still and stored in an environment of 10°C for 14 days, 28 days, or 60 days.
For each curable composition after a lapse of a predetermined number of storage days, the liquid component separated from oil was removed from the composition, the mass [g] was then measured, and an oil separation resistance ratio [%] was calculated based on the following Equation A.

(Equation A)

Oil separation resistance ratio [%] = (Amount [g] of oil separation component/Amount [g] of liquid component contained in curable composition before storage) × 100

In this evaluation, it was evaluated that the curable composition is excellent in oil separation resistance in a case in which the oil separation resistance ratio [%] shown below is satisfied depending on the number of storage days.

| (Number of storage days) | (Oil separation resistance ratio [%]) |
|---|---|
| For 14 days | 0.5% or less |
| For 28 days | 1.0% or less |
| For 60 days | 1.5% or less |

<Viscosity>

A shear viscosity η [Pa·s] at 25°C of the curable composition prepared above was measured using a dynamic viscoelasticity measuring device (product name: MCR 101 manufactured by Anton Paar).
As a jig for a curable composition to be measured, a PP25 parallel plate (diameter: 25 mm, manufactured by Anton Paar) was used.
The measurement was performed by measuring the shear viscosity η [Pa s] at each shear rate of 0.01 [1/s], 0.1 [1/s], 1 [1/s], 10 [1/s], and 100 [1/s].

<Thermal Conductivity [W/m·K]>

The thermal conductivity was measured in accordance with ASTM D5470.
An upper part and a lower part of a curable composition molded so as to have a size of length × width × height (thickness) = 10 mm × 10 mm × 1 mm were sandwiched between copper plates having a size of 10 mm × 10 mm, and

cured under curing conditions of 80°C for 30 minutes in a $N_2$ purge atmosphere, and then the thermal resistance (unit; $K \cdot cm^2/W$) was measured with a thermal resistance measuring device (manufactured by TSUKUBARIKASEIKI Co., Ltd., product name; Thermal resistance measuring device) and converted to thermal conductivity.

In this evaluation, the thermal conductivity was evaluated to be excellent in a case in which the thermal conductivity was 3 W/m·K or higher.

<Spreading Consistency>

The spreading consistency was determined by inserting 0.05 mL of a sample (curable composition before curing) between two acrylic plates under an environment of 25°C, applying a load of 100 g to the plates for 5 seconds to compress the sample, measuring the spreading diameter millimeter of the sample, and multiplying a value obtained by subtracting 1 from the measured value by 20.

<Hardness: Shape Stability>

-Softness after curing: Shore OO hardness (sample thickness; 6 mm)-

The softness of the cured product of the curable composition was measured in accordance with ASTM D2240.

The curable composition was molded into 50 mm × 20 mm × 6 mm (thickness: 6 mm), and cured under curing conditions of 80°C for 30 minutes in a $N_2$ purge atmosphere, and then the Shore OO hardness was measured using a durometer (product name; GS-754G, manufactured by TECLOCK Corporation) and an Asker rubber hardness meter.

-Softness after curing: Asker C hardness (sample thickness; 6 mm)-

The softness of the cured product of the curable composition was measured in accordance with JIS K 7312:1996.

The curable composition was molded into 50 mm × 20 mm × 6 mm (thickness: 6 mm), and cured under curing conditions of 80°C for 30 minutes in a $N_2$ purge atmosphere, and then the Asker C hardness was measured using an Asker rubber hardness meter type C (manufactured by KOBUNSHI KEIKI CO., LTD.).

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Monomer (B) having (meth) acryloyl group | ITEC | 4.78 | 4.78 | 4.78 | 4.78 | 4.78 | 4.78 | 4.78 | 6.51 | 5.12 | - |
| | Light Ester L | - | - | - | - | - | - | - | - | - | 4.78 |
| | 9PG | 0.10 | 0.10 | 0.10 | 0.10 | 0.10 | 0.10 | 0.10 | 0.14 | 0.11 | 0.10 |
| Plasticizer (E) | C-880 | 1.91 | 1.91 | 1.91 | 1.91 | 1.91 | 1.91 | 1.91 | 2.60 | 2.05 | 1.91 |
| Polymerization initiator (C) | PEROCTA O | 0.07 | 0.07 | 0.07 | 0.07 | 0.07 | 0.07 | 0.07 | 0.10 | 0.08 | 0.07 |
| Dispersant (D) | Oleic acid | 0.14 | 0.14 | 0.14 | 0.14 | 0.14 | 0.14 | 0.14 | 0.15 | 0.15 | 0.14 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Heat-conductive filler (A) | Zinc oxide | Zinc oxide of JIS 1 grade: particle size 0.6 μm (filler A) | 26.04 | 18.60 | 18.60 | 37.20 | 37.20 | - | 26.04 | 23.63 | 26.54 | 26.04 |
| | | Calcined zinc white 1: particle size 4 μm (filler B) | 18.60 | 18.60 | 37.20 | 18.60 | - | 37.20 | 18.60 | 16.88 | 18.96 | 18.60 |
| | | Calcined zinc white 2: particle size 11 μm (filler C) | - | - | - | - | - | - | 48.36 | - | - | - |
| | | Calcined zinc white 3 (surface-treated product): particle size 12 μm (filler C) | 48.36 | 55.80 | 37.20 | 37.20 | 55.80 | 55.80 | - | - | - | 48.36 |
| | | Calcined zinc white 4: particle size 19 μm | - | - | - | - | - | - | - | - | - | - |
| | Magnesium oxide | RF-10CS-SC: particle size 10 μm (filler C) | - | - | - | - | - | - | - | 50.00 | - | - |
| | Aluminum oxide | AA-10: particle size 13.5 μm (filler C) | - | - | - | - | - | - | - | - | 47.00 | - |
| Total [mass%] | | | 100.00 | 100.00 | 100.00 | 100.00 | 100.00 | 100.00 | 100.00 | 100.00 | 100.00 | 100.00 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Filling ratio, [mass%] | | | 93.00% | 93.00% | 93.00% | 93.00% | 93.00% | 93.00% | 93.00% | 90.50% | 92.50% | 93.00% |
| Curing conditions | | | 80°C/30 min | | | | | | | | | |
| Evaluation | Oil separation resistance ratio [%] | After 14 days | 0.04% | 0.23% | 0.10% | 0.07% | 0.38% | 0.32% | 0.46% | 0.31% | 0.36% | 0.31% |
| | | After 28 days | 0.05% | 0.45% | 0.25% | 0.17% | 0.79% | 0.67% | 0.88% | 0.81% | 0.61% | 0.67% |
| | | After 60 days | 0.19% | 0.88% | 0.47% | 0.33% | 1.20% | 1.02% | 1.32% | 1.14% | 1.01% | 1.12% |
| | Viscosity [Pa·s] at 25°C | Number of revolutions: 0.01 $sec^{-1}$ | 2350 | 1420 | 09 | 1580 | 2560 | 1010 | 2120 | 4050 | 2450 | 1110 |
| | | Number of revolutions: 0.1 $sec^{-1}$ | 318 | 232 | 122 | 403 | 452 | 221 | 376 | 1830 | 386 | 246 |
| | | Number of revolutions: 1 $sec^{-1}$ | 384 | 252 | 247 | 393 | 462 | 116 | 354 | 532 | 321 | 109 |
| | | Number of revolutions: 10 $sec^{-1}$ | 107 | 87 | 71 | 103 | 118 | 79 | 96 | 135 | 81 | 100 |
| | | Number of revolutions: 100 $sec^{-1}$ | 7 | 1 5 | 10 | 12 | 12 | 9 | 6 | 18 | 16 | 9 |
| | Spreading consistency | | 300 | 305 | 315 | 300 | 295 | 315 | 305 | 280 | 310 | 305 |
| | Thermal conductivity | W/m·K | 3.18 | 3.10 | 3.02 | 3.00 | 3.18 | 3.13 | 3.03 | 3.00 | 3.31 | 3.23 |
| | Hardness **80°C, 30 min, $N_2$ purge** | Asker C | 60 | 63 | 66 | 64 | 56 | 60 | 61 | 55 | 72 | 78 |
| | | **Shore OO** | 80 | 85 | 86 | 83 | 82 | 82 | 81 | 77 | 92 | 93 |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Monomer (B) having (meth) acryloyl group | | ITEC | 4.78 | 4.78 | 4.78 | 4.78 | 4.78 | 4.78 |
| | | Light Ester L | | | | | | |
| | | 9PG | 0.10 | 0.10 | 0.10 | 0.10 | 0.10 | 0.10 |
| Plasticizer (E) | | C-880 | 1.91 | 1.91 | 1.91 | 1.91 | 1.91 | 1.91 |
| Polymerization initiator (C) | | PEROCTA O | 0.07 | 0.07 | 0.07 | 0.07 | 0.07 | 0.07 |
| Dispersant (D) | | Oleic acid | 0.14 | 0.14 | 0.14 | 0.14 | 0.14 | 0.14 |
| Heat-conductive filler (A) | Zinc oxide | Zinc oxide of JIS 1 grade: particle size 0.6 μm (filler A) | 9.30 | 13.95 | 9.30 | 32.55 | | 26.04 |
| | | Calcined zinc white 1: particle size 4 μm (filler B) | 62.78 | 55.80 | | | | |
| | | Calcined zinc white 2: particle size 11 μm (filler C) | | | | | | |
| | | Calcined zinc white 3 (surface-treated product): particle size 12 μm (filler C) | 20.93 | 23.25 | 62.78 | 60.45 | 60.45 | |
| | | Calcined zinc white 4: particle size 19 μm | | | | | | |
| | Magnesium oxide | RF-10CS-SC: particle size 10 μm (filler C) | | | | | | |
| | Aluminum oxide | AA-10: particle size 13.5 μm (filler C) | | | | | | |
| Total [mass%] | | | 100.00 | 100.00 | 100.00 | 100.00 | 100.00 | 100.00 |
| Filling ratio, [mass%] | | | 93.00% | 93.00% | 93.00% | 93.00% | 93.00% | 93.00% |
| Curing conditions | | | 80°C/30 min | | | | | |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| Evaluation | Oil separation resistance ratio [%] | After 14 days | 0.65% | 0.57% | 0.73% | 0.51% | 0.58% | 0.530% |
| | | After 28 days | 1.20% | 1.12% | 1.42% | 1.02% | 1.10% | |
| | | After 60 days | 1.85% | 1.60% | 1.98% | 1.55% | 1.68% | 1.62% |
| | Viscosity [Pa·s] at 25°C | Number of revolutions: 0.01 $sec^{-1}$ 370 | 370 | 936 | 728 | 2490 | 242 | 1860 |
| | | Number of revolutions: 0.1 $sec^{-1}$ | 149 | 233 | 212 | 522 | 167 | 452 |
| | | Number of revolutions: 1 $sec^{-1}$ 216 | 216 | 339 | 169 | 433 | 149 | 312 |
| | | Number of revolutions: 10 $sec^{-1}$ | 52 | 72 | 93 | 124 | 80 | 90 |
| | | Number of revolutions: 100 $sec^{-1}$ | 9 | 11 | 24 | 15 | 13 | 10 |
| | Spreading consistency | | 320 | 310 | 300 | 300 | 310 | 300 |
| | Thermal conductivity | W/m·K | 2.41 | 2.78 | 3.11 | 3.13 | 3.17 | 3.26 |
| | Hardness **80°C, 30 min, $N_2$ purge** | Asker C | 68 | 72 | 62 | 56 | 60 | 64 |
| | | **Shore OO** | **84** | **88** | **79** | **82** | **82** | **85** |

[Table 3]

| | Filler content ratio | | | | | | | | | | | | | | | |
|---|---|---|---|---|---|---|---|---|---|---|---|---|---|---|---|---|
| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 |
| Heat-conductive filler A | 28% | 20% | 20% | 40% | 40% | - | 28% | 26% | 29% | 28% | 10% | 15% | 10% | 35% | - | 28% |
| Heat-conductive filler B | 20% | 20% | 40% | 20% | - | 40% | 20% | 19% | 20% | 20% | 68% | 60% | 23% | - | 35% | 20% |
| Heat-conductive filler C | 52% | 60% | 40% | 40% | 60% | 60% | 52% | 55% | 51% | 52% | 23% | 25% | 68% | 65% | 65% | - |
| Other heat-conductive filler | - | - | - | - | - | - | - | - | - | - | - | - | - | - | - | 52% |

Details of each component described in Tables 1 and 2 are as follows.

"-" in Tables 1 and 2 indicates that the corresponding component is not contained.

In Tables 1 and 2, "Filling ratio, [mass%]" represents the ratio of the total mass of the heat-conductive filler (A) to the total mass of the composition.

In Table 3, "%" represents "mass%".

<<Monomer (B) Having (Meth)acryloyl Group>>

· ITEC: 2-decyltetradecyl methacrylate; manufactured by SHIN-NAKAMURA CHEMICAL Co., Ltd.
· Light Ester L: lauryl methacrylate; manufactured by Kyoeisha Chemical Co., Ltd., product name; LMA
· 9PG (bifunctional monomer): polypropylene glycol dimethacrylate; manufactured by SHIN-NAKAMURA CHEMICAL Co., Ltd., product name; 9PG

«Plasticizer (E)»

· C-880: ADK CIZER C-880 (product name); trimellitic acid mixed linear alkyl ester; manufactured by ADEKA CORPORATION

«Polymerization Initiator (C)>>

· PEROCTA O: 1,1,3,3-tetramethylbutyl peroxy-2-ethylhexanoate; manufactured by NOF CORPORATION

<<Dispersant (D)>>

· Oleic acid: manufactured by NOF CORPORATION, product name; Oleic acid

<<Heat-Conductive Filler (A)»

(Zinc Oxide)

· Zinc oxide of JIS 1 grade: volume average particle size; 0.6 $\mu$m, manufactured by SAKAI CHEMICAL INDUSTRY CO., LTD.
· Calcined zinc white 1: volume average particle size; 4 $\mu$m, manufactured by HAKUSUI TECH CO., LTD.
· Calcined zinc white 2: volume average particle size; 11 $\mu$m, manufactured by HAKUSUI TECH CO., LTD.
- Calcined zinc white 3 (surface-treated product): treated with silane coupling agent, volume average particle size; 12 $\mu$m, manufactured by HAKUSUI TECH CO., LTD.
· Calcined zinc white 4: volume average particle size; 19 $\mu$m, manufactured by HAKUSUI TECH CO., LTD.

(Magnesium Oxide)

· RF-10CS-SC: product name, volume average particle size; 10 $\mu$m, manufactured by Ube Material Industries, Ltd.

(Aluminum Oxide)

- AA-10: product name, volume average particle size; 13.5 μm, manufactured by SUMITOMO CHEMICAL COMPANY, LIMITED

As shown in the results of Tables 1 and 2, it is found that the curable compositions of Examples 1 to 10 are excellent in oil separation resistance as compared with the curable compositions of Comparative Examples 1 to 6.
As described above, the curable composition and the cured product according to the disclosure can be suitably used as a gap filler.
The entire contents of the disclosures by Japanese Patent Application No. 2021-061631 filed on March 31, 2021 are incorporated herein by reference. All the literature, patent application, and technical standards cited herein are also herein incorporated to the same extent as provided for specifically and severally with respect to an individual literature, patent application, and technical standard to the effect that the same should be so incorporated by reference.

## Claims

1. A curable composition, comprising:

   a heat-conductive filler (A) including at least one selected from the group consisting of a heat-conductive filler A having a volume average particle size of from 0.3 μm to less than 1 μm and a heat-conductive filler B having a volume average particle size of from 1 μm to less than 10 μm, and including a heat-conductive filler C having a volume average particle size of from 10 μm to 15 μm;
   a monomer (B) having a (meth)acryloyl group;
   a polymerization initiator (C); and
   a dispersant (D),
   wherein, based on a total mass of the heat-conductive filler (A), a content X of the heat-conductive filler A is from 0 mass% to 40 mass%, a content Y of the heat-conductive filler B is from 0 mass% to 40 mass%, and a content Z of the heat-conductive filler C is from 20 mass% to 60 mass%, wherein the content X and the content Y are not both 0 mass%.

2. The curable composition according to claim 1, wherein the heat-conductive filler (A) comprises at least one selected from zinc oxide, magnesium oxide, or aluminum oxide.

3. The curable composition according to claim 2, wherein the heat-conductive filler (A) comprises zinc oxide.

4. The curable composition according to any one of claims 1 to 3, wherein the heat-conductive filler (A) is a surface-treated heat-conductive filler.

5. The curable composition according to any one of claims 1 to 4, wherein the monomer (B) comprises a compound represented by the following Formula (1):

   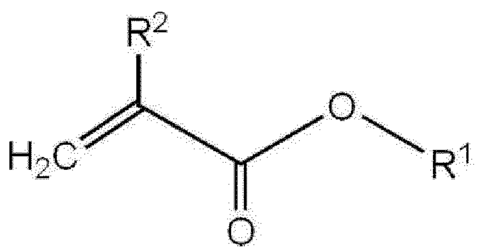

   (1)

   wherein, in Formula (1), $R^1$ represents an alkyl group having from 1 to 50 carbon atoms, and $R^2$ represents a hydrogen atom or a methyl group.

6. The curable composition according to any one of claims 1 to 5, wherein the monomer (B) comprises a compound represented by the following Formula (2):

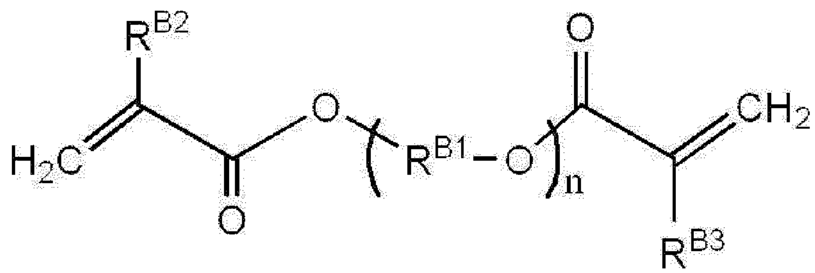

(2)

wherein, in Formula (2), $R^{B1}$ represents an alkylene group having from 1 to 5 carbon atoms, each of $R^{B2}$ and $R^{B3}$ independently represents a hydrogen atom or a methyl group, and n represents an integer that is 4 or higher.

**7.** A cured product of the curable composition according to any one of claims 1 to 6.

## INTERNATIONAL SEARCH REPORT

International application No.
**PCT/JP2022/002950**

### A. CLASSIFICATION OF SUBJECT MATTER

***C08F 20/10***(2006.01)i; ***C08F 2/44***(2006.01)i
FI: C08F2/44 A; C08F20/10

According to International Patent Classification (IPC) or to both national classification and IPC

### B. FIELDS SEARCHED

Minimum documentation searched (classification system followed by classification symbols)

C08F20/10; C08F2/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/149193 A1 (COSMO OIL LUBRICANTS CO LTD) 23 July 2020 (2020-07-23) tables 1, 3, examples 4-5, 8, 10, etc. | 1-7 |
| A | JP 2016-188297 A (NIPPON ZEON CO) 04 November 2016 (2016-11-04) | 1-7 |
| A | JP 2021-38318 A (SHIN-ETSU CHEMICAL CO., LTD.) 11 March 2021 (2021-03-11) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/002950**

| Patent document cited in search report | Publication date (day/month/year) | Patent family member(s) | Publication date (day/month/year) |
|---|---|---|---|
| WO 2020/149193 A1 | 23 July 2020 | TW 202035580 A | |
| JP 2016-188297 A | 04 November 2016 | (Family: none) | |
| JP 2021-38318 A | 11 March 2021 | US 2021/0061955 A1<br>CN 112442272 A<br>KR 10-2021-0028120 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020149193 A
- JP 2021061631 A